# FASCICULE DE BREVET EUROPEEN

(11) **EP 2 715 240 B1**
(45) Date de publication et mention de la délivrance du brevet: **18.12.2019**
(21) Numéro de dépôt: 11728907.4
(22) Date de dépôt: 24.05.2011
(51) Int. Cl.: F24F 3/16, G01F 9/02, F24F 13/24

(54) **APPAREIL PERFECTIONNÉ DE FILTRATION ET D'ASEPTISATION DE L'AIR AMBIANT**
VERBESSERTE RAUMLUFTFILTER-UND DESINFIZIERENEINHEIT
IMPROVED AIR FILTRATION AND DISINFECTION DEVICE

(43) Date de publication de la demande: 09.04.2014
(73) Titulaire: PRODUITS SANITAIRES AERONEFS PSA (Société par Actions Simplifiée), 75008 Paris (FR)
(72) Inventeur: Preau, Philippe, 13008 Marseille (FR); Mazet, Jean, 13006 Marseille (FR)
(74) Mandataire: Weber, Etienne Nicolas
(86) Numéro de dépôt international: PCT/FR2011/000310
(87) Numéro de publication internationale: WO 2012/160263

(56) Documents cités:
- EP-A1- 2 071 249
- DE-A1- 4 130 648
- DE-A1- 19 803 357
- FR-A- 1 188 485
- FR-A1- 2 928 996
- FR-A1- 2 950 258

## Description

La présente invention concerne un appareil perfectionné de filtration et d'aseptisation de l'air ambiant. Elle entre dans le domaine des purificateurs d'air électro mécaniques. Plus précisément, elle vise des perfectionnements apportés à l'appareil de filtration et d'aseptisation décrit dans le document FR-2.950.258.

Dans ce document, est décrit un appareil de filtration et d'aseptisation de l'air ambiant comprenant un caisson rigide renfermant :
- d'une part, en partie basse :
   - un préfiltre communiquant avec une entrée d'air constituée par une grille ou ouïe dont est pourvu l'arrière dudit caisson, ce préfiltre permettant de retenir les plus grosses particules présentes dans l'air.
   - un moto-ventilateur de type hélicoïdal permettant la mise en circulation d'un volume important d'air en direction de la partie haute dudit caisson.
- d'autre part, en partie haute :
   - un filtre absolu pouvant retenir 99,999 % ou plus, des particules égales ou supérieures à 0.3 microns présentes dans l'air,
      appareil dans lequel le cycle de purification de l'air se fait verticalement, de bas en haut, en traversant les composants ci-dessus,
   - cet appareil étant notamment remarquable en ce qu'un silencieux acoustique, encore appelé piège à son, constitué d'éléments absorbants aptes à réduire le niveau sonore de l'installation aéraulique, est disposé entre le moto-ventilateur et le filtre absolu.

On comprend que l'un des objectifs visés par cet appareil est d'obtenir une réduction du niveau sonore de fonctionnement par rapport au niveau acoustique de fonctionnement des appareils de l'état de la technique, lequel est relativement élevé et constitue une source d'incommodité, en particulier lorsque ces appareils sont installés dans des lieux de vie ou de travail, par exemple dans les chambres à coucher ou dans les chambres d'hôpitaux.

Un autre objectif visé par cet appareil est :
- de procurer un air débarrassé des particules gênantes et porteuses de germes infectieux et ou chargées en radio-éléments, grâce à un filtre absolu,
- de fournir une meilleure cinétique de décontamination, temps de récupération / épuration de l'air par l'utilisation d'un moto-ventilateur à débit important,
- de permettre un risque minimal de bio contamination.

Dans le document FR-2.950.258, on a seulement indiqué que le silencieux acoustique ou piège à son est constitué d'éléments absorbants aptes à réduire le niveau sonore de fonctionnement de l'installation aéraulique et pouvant être composés de plaques espacées de matériau absorbant, encore appelées baffles.

Le document DE19803357 décrit une installation de filtration pour salle blanche, comprenant un filtre et dont les parois conductrices d'air sont revêtues d'un matériau insonorisant.

Le document FR1.188.485 divulgue un abri anti-atomique comportant des panneaux de plexiglas s'opposant aux radiations atomiques.

Un objectif de la présente invention est de proposer un appareil permettant une réduction du niveau sonore relativement importante par rapport au niveau sonore résultant du fonctionnement du dispositif décrit dans le document FR-2.950.258.

Un autre objectif de la présente invention est de réduire considérablement la propagation des radiations générées par les particules radioactives qui peuvent être retenues dans le filtre absolu.

Ces objectifs sont atteints grâce à un appareil du genre susmentionné remarquable en ce qu'une gaine isolante est disposée au moins autour du filtre absolu, cette gaine ayant la propriété de s'opposer à la propagation, d'une part, des ondes sonores résultant du passage du flux d'air à travers le filtre absolu et/ ou le filtre à charbons actifs associé audit filtre absolu, et, d'autre part, des radiations générées par les particules de matière radioactive qui peuvent être retenues dans ledit filtre absolu et/ou dans le filtre à charbons actifs.

Selon un mode d'exécution préféré, la gaine isolante est constituée par un habillage ou chemisage dont est munie la surface interne d'au moins la portion des parois latérales du caisson délimitant l'emplacement d'installation du filtre absolu.

Selon un autre mode d'exécution, la gaine isolante est constituée par un habillage ou chemisage s'étendant sur toute la hauteur du caisson.

Selon un mode de mise en œuvre, la gaine isolante est constituée par une couche d'un matériau ou de plusieurs matériaux et présentant, d'une part, des propriétés d'isolation acoustique (plomb, goudron, mousse, polycarbonate plastique..) permettant d'atténuer le niveau sonore lié au passage de l'air à l'intérieur du filtre absolu, et, d'autre part, des propriétés antiradiation permettant de bloquer le rayonnement des particules radioactives éventuellement présentes dans l'air et retenues dans le filtre absolu et/ou dans le filtre à charbons actifs

L'appareil peut comporter une ou plusieurs des dispositions caractéristiques ci-après :
- La gaine isolante est constituée par une feuille de plomb.
- La gaine isolante est constituée par un matériau multicouche formé d'une couche de plomb et d'une couche de mousse alvéolée.
- La gaine isolante est constituée par une feuille de plexiglas.
- La gaine isolante est constituée par un matériau multicouche formé d'une couche de plexiglas et d'une couche de mousse alvéolée.
- La gaine isolante est constituée par un matériau multicouche formé d'une couche de plomb, d'une couche de plexiglas et d'une couche de mousse alvéolée.

La gaine isolante constituée par un matériau multicouche incluant une couche de mousse est collée contre les parois internes du caisson par l'intermédiaire de ladite couche de mousse.

Selon une autre disposition caractéristique, l'appareil comporte un filtre à charbon actif disposé en amont du filtre absolu et à proximité de ce dernier, ce filtre à charbon actif étant conçu pour piéger les molécules, notamment pour l'élimination des gaz, des odeurs et des radio éléments. Dans ce cas, la gaine isolante entoure également le filtre à charbon actif.

Un autre objectif de la présente invention est de permettre un contrôle de l'efficacité du filtre absolu afin de prévoir et d'anticiper, si besoin est, le changement de ce filtre lorsqu'un degré de colmatage nuisant à son efficacité est constaté.

Ce but est réalisé grâce à un dispositif de contrôle de l'efficacité du filtre absolu comprenant :
- d'une part, un moyen de mesure de la pression disposé en amont du filtre absolu, et,
- d'autre part, un moyen de mesure simultanée de la pression disposé en aval du filtre absolu,

Ce dispositif de contrôle comprenant encore un système électronique embarqué configuré et programmé pour permettre de calculer la pression différentielle et d'actionner un dispositif d'alarme lorsque la pression différentielle mesurée correspond à un indice de colmatage maximum prédéterminé.

Selon un mode de mise en œuvre avantageux, les moyens de mesure de la pression en amont et en aval du filtre absolu sont constitués, respectivement, par deux tubes de Pitot ou autres sondes de détection, qui mesurent simultanément la pression en amont et en aval du filtre absolu.

Selon un mode d'exécution préféré, l'appareil comporte une platine supportant le système d'alarme lié au colmatage et disposée sur le pupitre situé sur la paroi avant du caisson rigide.

Les buts, caractéristiques et avantages ci-dessus, et d'autres encore, ressortiront mieux de la description détaillée qui suit et des dessins annexés dans lesquels :

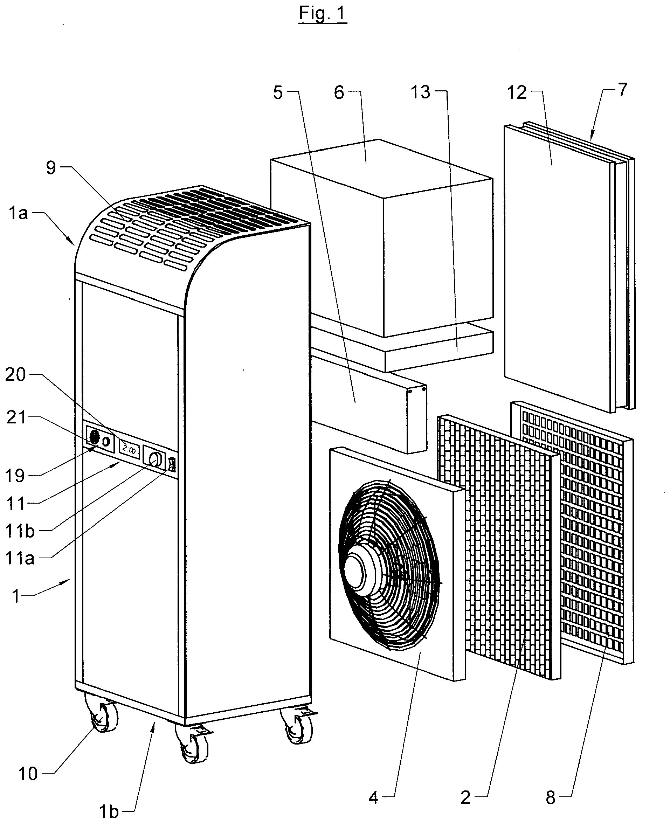

La figure 1 est une vue en perspective éclatée du dispositif de filtration et d'aseptisation de l'air selon l'invention.

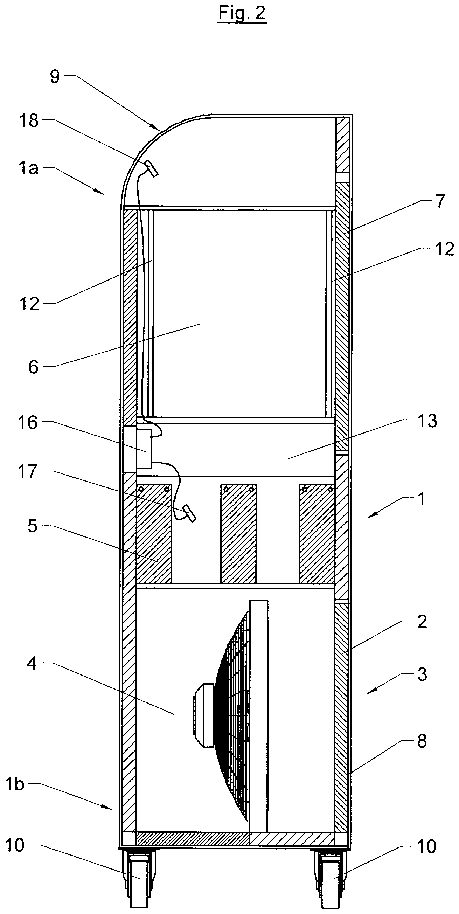

La figure 2 est une vue en coupe longitudinale de ce dispositif de filtration et d'aseptisation de l'air ambiant.

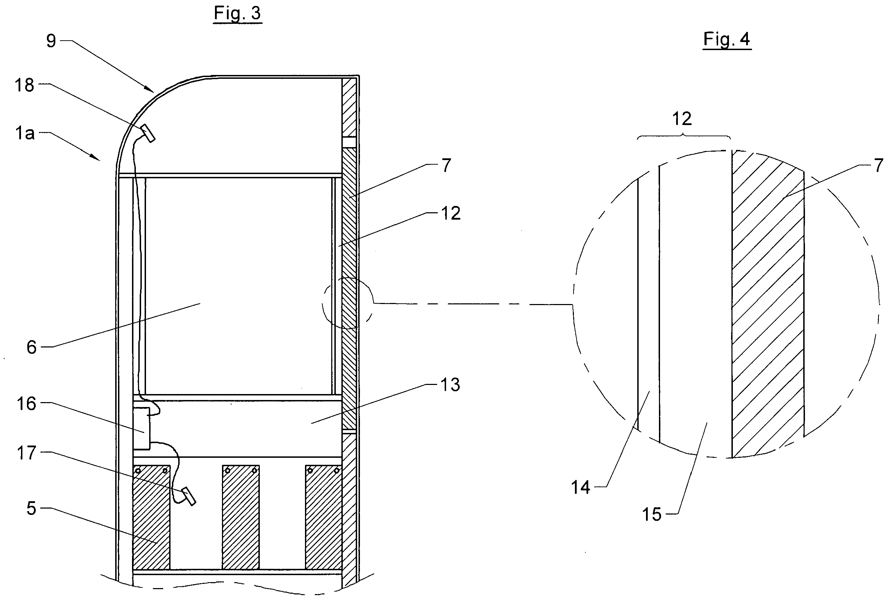

La figure 3 est une vue de détail, à échelle agrandie, de la partie haute de l'appareil comportant les perfectionnements de l'invention.
La figure 4 est une vue de détail à échelle encore plus agrandie, illustrant le positionnement de la gaine isolante de protection.

On se réfère auxdits dessins pour décrire un exemple intéressant quoique nullement limitatif, de réalisation de l'appareil perfectionné de filtration et d'aseptisation de l'air ambiant selon l'invention.

Dans le présent exposé et dans les revendications, les mots « supérieure », « inférieur(e) », « haut(e) » et « bas(se) » sont utilisés en référence au positionnement fonctionnel des éléments constitutifs du dispositif revendiqué.

L'appareil perfectionné de filtration et d'aseptisation de l'air ambiant, selon l'invention comprend, comme décrit dans le document FR-2.950.258, un caisson ou carénage rigide 1 renfermant :
- d'une part, en partie basse :
   - un préfiltre 2 communiquant avec une entrée d'air 3 et permettant de retenir les plus grosses particules présentes dans l'air, et,
   - un moto-ventilateur 4 permettant la mise en circulation d'un volume important d'air en direction de la partie haute dudit caisson, et,
- d'autre part, en partie haute :
   - un filtre absolu 6 pouvant retenir les fines particules restantes présentes dans l'air, et,
   - un silencieux acoustique 5, encore appelé piège à son, constitué d'éléments absorbants aptes à réduire le niveau sonore de l'installation aéraulique, et disposé entre le moto-ventilateur 4 et le compartiment filtre absolu et/ou le filtre à charbons actifs 6,
appareil dans lequel le cycle de purification de l'air se fait verticalement, de bas en haut, en traversant les composants ci-dessus 2, 4, 6.

De manière avantageuse, la coque externe rigide 1 du caisson de filtration comporte au moins deux panneaux amovibles. L'un 7 de ces panneaux est disposé en partie supérieure du caisson, tandis que l'autre 8 est placé en partie inférieure. Ils permettent l'accès à chacun des éléments 2, 4, 5 et 6 logés dans ledit caisson, par exemple pour la maintenance et/ou le remplacement de ces derniers.

Selon l'exemple illustré, le panneau amovible inférieur 8 contient le préfiltre 2.

Le moto-ventilateur 4 est préférentiellement de type hélicoïdal donnant un débit d'air très important tout en étant d'un fonctionnement peu bruyant.

De préférence et avantageusement, le cycle de purification de l'air se fait verticalement, de bas en haut. En effet, pour avoir une circulation de l'air homogène dans toutes les directions, le flux traversant le dispositif doit être turbulent et n'est alors diffusé que par le haut.

Le filtre absolu 6 est de type connu en soi, par exemple de type buvard synthétique, constitué de micro fibres de verre ou de fibres de cellulose et de fibres minérales. Un tel filtre a généralement une durée de vie comprise entre 1 et 3 ans.

Selon une première disposition caractéristique de l'invention, une gaine isolante 12 est disposée au moins autour du filtre absolu 6, cette gaine ayant la propriété de s'opposer à la propagation, d'une part, des ondes sonores résultant du passage du flux d'air à travers le filtre absolu, et, d'autre part, des radiations générées par les particules de matière radioactive qui peuvent être retenues dans ledit filtre absolu 6.

De manière préférée et avantageuse la gaine isolante 12 est fixée sur la face interne d'au moins la paroi latérale du caisson 1 délimitant l'emplacement d'installation du filtre absolu 6.

Toutefois, la gaine isolante 12 peut être aussi constituée par un habillage ou chemisage s'étendant sur toute la hauteur du caisson 1.

Suivant un autre mode d'exécution, le filtre absolu 6 peut encore être complété par le montage d'un filtre à charbon actif 13, en amont dudit filtre absolu 6 et à proximité de ce dernier, constituant alors un adsorbant destiné à piéger les molécules, notamment pour l'élimination des gaz, et des odeurs et ou radio éléments, par exemple d'hydrocarbures, d'aliments, de tabac, ...

Dans ce cas, la gaine isolante 12 entoure également, avantageusement, le filtre à charbon actif 13.

Cette gaine isolante 12 est notamment remarquable en ce qu'elle présente la propriété de permettre de bloquer certains rayonnements ionisants générés par les particules radioactives éventuellement retenues dans le filtre absolu 6. Elle présente également la propriété de s'opposer à la propagation des ondes sonores. La gaine isolante 12 peut être constituée par une feuille ou plaque de plomb 14, ayant, par exemple, une épaisseur d'au moins 2 mm.

De manière préférée, la gaine isolante 12 est constituée par un matériau multicouche comprenant une couche de plomb 14 associée à une couche de mousse alvéolée 15. Cette couche de mousse 15 a, par exemple, une épaisseur d'au moins 3 à 5 mm.

Ce mode d'exécution de la gaine isolante 12 est très efficace pour s'opposer à la propagation, d'une part, des ondes sonores résultant du passage du flux d'air à travers le filtre absolu, et, d'autre part, des radiations générées par les particules de matière radioactive qui peuvent être retenues dans ledit filtre absolu 6. Il permet également de stabiliser le filtre absolu 6 en cas d'importantes vibrations dans le caisson, atténuant ainsi encore le niveau sonore de l'appareil de filtration et d'aseptisation.

Selon un autre mode de mise en œuvre, la gaine isolante 12 recouvrant la face interne du caisson 1 est constituée par une feuille de plexiglas, ayant, par exemple, une épaisseur d'au moins 2 mm. Cette feuille de plexiglas est notamment remarquable en ce qu'elle présente la propriété de permettre de bloquer certain rayonnements ionisant tels que les rayonnements beta générés par les particules radioactives éventuellement retenues dans le filtre absolu 6. Elle présente également la propriété d'isolation acoustique.

Cette plaque de plexiglas peut également être associée à une couche de mousse alvéolée 15.

Selon un autre exemple de réalisation, l'habillage 13 est constitué par un matériau multicouche formé d'une couche de plomb 14, d'une couche de plexiglas et d'une couche de mousse alvéolée 15.

Avantageusement, la gaine isolante 12 constituée par un matériau multicouche incluant une couche de mousse 15 est collée contre les parois internes du caisson 1 par l'intermédiaire de la couche de mousse 15.

La gaine isolante 12 présente une section de forme analogue à celle de la section du caisson rigide 1.

Cette disposition caractéristique permet de réduire de façon relativement importante le niveau sonore de l'appareil perfectionné de filtration et d'aseptisation de l'air ambiant en faisant passer le bruit de 45 dB à 39 dB.

L'appareil ainsi équipé de la gaine isolante 12 permet également de bloquer la propagation des radiations émises par les micro-particules ionisantes piégées dans le filtre absolu, ces dernières n'étant ainsi pas propulsées dans la pièce à purifier.

Selon un autre mode de réalisation avantageux, l'appareil comporte un dispositif 16 de contrôle de l'efficacité du filtre absolu 6.

Ce dispositif de contrôle 16 comprend :
- d'une part, un moyen 17 de mesure de la pression, disposé en amont du filtre absolu 6, et,
- d'autre part, un moyen 18 de mesure simultanée de la pression, disposé en aval du filtre absolu 6,

Ce dispositif de contrôle 16 comprenant encore un système électronique embarqué configuré et programmé pour permettre de calculer la pression différentielle et d'actionner un dispositif d'alarme 19, qui peut être de type sonore et/ou visuel (voyant lumineux), lorsque la pression différentielle mesurée correspond à un indice de colmatage maximum prédéterminé.

Ces moyens 17, 18 de mesure sont constitués, respectivement, par deux tubes de Pitot qui mesurent simultanément la pression en amont et en aval du filtre absolu 6.

En combinaison avec les moyens 17 et 18 de mesure de pression, peut être ajouté un anémomètre (non représenté) à fil chaud ou à hélice afin de mesurer la vitesse de l'air, les mesures étant également gérées par un système électronique embarqué comprenant, par exemple, un microprocesseur déduisant de cette vitesse d'air mesurée, le débit d'air de l'appareil de filtration et d'aseptisation, en m³/h.

De préférence et avantageusement, le caisson de filtration et d'aseptisation de l'air est muni d'un pupitre de commande 11. Ce pupitre de commande est géré par une électronique embarquée connue en soi.

Le pupitre 11 peut comporter, d'une part, un bouton marche/arrêt 11a, et, d'autre part, un curseur de réglage 11b, permettant à l'utilisateur d'adapter la puissance du moto-ventilateur 4 à l'utilisation à laquelle le caisson de filtration est destiné, par exemple, un mode de fonctionnement diurne, un mode de fonctionnement nocturne, un mode de fonctionnement dit de décontamination, ...

Le pupitre 11 peut encore comporter un afficheur 20 permettant l'affichage et le contrôle de la pression et du débit d'air de l'appareil.

L'appareil comporte encore une platine 21 supportant le système d'alarme 19 lié au colmatage et disposée sur le pupitre 11 situé sur la paroi avant du caisson rigide 1.

Ainsi, en cas d'insuffisance du débit ou si la pression mesurée en amont du filtre absolu 6 est trop importante, une alarme sonore et/ou un voyant lumineux se déclenchent, signifiant alors que le filtre absolu est encrassé et à atteint son indice maximum de colmatage.

Une régulation électronique peut être activée par le microprocesseur qui, dans ce cas, commande une augmentation de la vitesse de rotation du moto-ventilateur 4 générant alors un débit d'air plus important.

Le sommet 1a du caisson 1 est muni d'une grille 9 de sortie de l'air aseptisé.

Selon un mode de mise en œuvre, la base 1b du caisson 1 est munie de roues 10 permettant les déplacements aisés de l'appareil en fonction des nécessités et de la conformation des locaux.

L'appareil de filtration selon l'invention peut mesurer de l'ordre de 140 cm de hauteur, 72 cm de largeur et 35 cm de profondeur.

On peut également envisager des appareils de taille plus réduite, par exemple pour les particuliers ou les hospitalisations à domicile, avec des dimensions, par exemple, de l'ordre de 80 de hauteur, 30 de largeur et 25 de profondeur. Le débit d'air pourrait être, alors de l'ordre de 400 m³/h.

Le caisson rigide 1 peut être en métal ou en matière plastique rigide. Dans ce dernier cas, ledit caisson est obtenu par un procédé de moulage connu en soi.

On conçoit bien le fonctionnement de l'appareil qui vient d'être décrit.

L'appareil étant placé dans une pièce que l'on souhaite maintenir à l'état d'aseptisation recherché, sous l'effet de l'action du moto-ventilateur 4, l'air de cette pièce est donc aspiré en partie basse du caisson, et refoulé en direction de la partie haute de ce dernier. Il traverse en premier lieu le préfiltre 2 qui permet de retenir les particules les plus grosses (jusqu'à 10 µm). Il traverse ensuite le silencieux acoustique 5, afin de réduire le niveau sonore de l'installation. L'air traverse ensuite le filtre à charbon actif 13 où il est débarrassé des molécules, par exemple à l'origine d'odeurs désagréables. L'air traverse enfin le filtre absolu 6 où il est débarrassé des particules les plus fines (jusqu'à 0,3 µm), avant d'être renvoyé, purifié à 99,999%, dans la pièce, à travers la grille de sortie d'air 9 équipant le sommet 1b du caisson de filtration. Ce mode de filtration consistant à aspiré l'air d'une pièce et à le renvoyer dans la même pièce est appelé « recyclage ».

On conçoit que la gaine isolante 12 selon l'invention permet, comme indiqué ci-dessus, d'atténuer sensiblement le bruit résultant du passage du flux d'air à travers le filtre absolu 6. Elle permet également de s'opposer à la propagation des radiations générées par les particules de matière radioactive qui peuvent être retenues dans ledit filtre absolu 6.

Selon un autre mode d'exécution, le dispositif peut être utilisé pour mettre une pièce en surpression ou en dépression, comme précisé dans le document FR-2.950.258.

## Revendications

1. Appareil perfectionné de filtration et d'aseptisation de l'air ambiant, comprenant un caisson rigide (1) renfermant :
- d'une part, en partie basse :
- un préfiltre (2) communiquant avec une entrée d'air (3) et permettant de retenir les plus grosses particules présentes dans l'air, et,
- un moto-ventilateur (4) permettant la mise en circulation d'un volume important d'air en direction de la partie haute dudit caisson, et,
- d'autre part, en partie haute :
- un filtre absolu (6) pouvant retenir les fines particules restantes présentes dans l'air, et,
- un silencieux acoustique (5), encore appelé piège à son, constitué d'éléments absorbants aptes à réduire le niveau sonore de l'installation aéraulique, et disposé entre le moto-ventilateur (4) et le filtre absolu (6),
appareil dans lequel le cycle de purification de l'air se fait verticalement, de bas en haut, en traversant les composants ci-dessus (2, 4, 6),
**caractérisé en ce qu'**une gaine isolante est disposée autour du filtre absolu (6), cette gaine ayant la propriété de s'opposer à la propagation, d'une part, des ondes sonores résultant du passage du flux d'air à travers le filtre absolu, et, d'autre part, des radiations générées par les particules de matière radioactive qui peuvent être retenues dans ledit filtre absolu (6).

2. Appareil selon la revendication 1, **caractérisé en ce que** la gaine isolante (12) est constituée par un habillage ou chemisage dont est munie la surface interne d'au moins la portion des parois latérales du caisson (1) délimitant remplacement d'installation du filtre absolu (6).

3. Appareil selon l'une quelconque des revendications 1 ou 2, **caractérisé en ce que** la gaine isolante (12) est constituée par un habillage ou chemisage s'étendant sur toute la hauteur du caisson (1).

4. Appareil selon l'une quelconque des revendications 1 à 3, **caractérisé en ce que** la gaine isolante (12) est constituée par une feuille de plomb (14).

5. Appareil selon l'une quelconque des revendications 1 à 3, **caractérisé en ce que** la gaine isolante (12) est constituée par un matériau multicouche formé d'une couche de plomb (14) et d'une couche de mousse alvéolée (15).

6. Appareil selon l'une quelconque des revendications 1 à 3, **caractérisé en ce que** la gaine isolante (12) est constituée par une feuille de plexiglas.

7. Appareil selon l'une quelconque des revendications 1 à 3, **caractérisé en ce que** la gaine isolante (12) est constituée par un matériau multicouche formé d'une couche de plexiglas et d'une couche de mousse alvéolée (15).

8. Appareil selon l'une quelconque des revendications 1 à 3, **caractérisé en ce que** la gaine isolante (12) est constituée par un matériau multicouche formé d'une couche de plomb (14), d'une couche de plexiglas et d'une couche de mousse alvéolée (15).

9. Appareil selon l'une quelconque des revendications 1 à 8, **caractérisé en ce que** la gaine isolante (12) constituée par un matériau multicouche incluant une couche de mousse (15), est collée contre les parois internes du caisson (1) par l'intermédiaire de ladite couche de mousse (15).

10. Appareil selon l'une quelconque des revendications 1 à 9, **caractérisé en ce qu'**il comporte un filtre à charbon actif (13) disposé en amont du filtre absolu (6) et à proximité de ce dernier, ce filtre à charbon actif étant conçu pour piéger les molécules, notamment pour l'élimination des gaz, et des odeurs et ou radio éléments.

11. Appareil selon la revendication 10, **caractérisé en ce que** le filtre à charbon actif (13) se trouve également entouré par la gaine isolante (12).

12. Appareil selon l'une quelconque des revendications 1 à 3, **caractérisé en ce qu'**il comporte un dispositif de contrôle (16) de l'efficacité du filtre absolu (6) comprenant :
- d'une part, un moyen (17) de mesure de la pression disposé en amont du filtre absolu (6), et,
- d'autre part, un moyen (18) de mesure simultanée de la pression disposé en aval du filtre absolu (6),
ce dispositif de contrôle (16) comprenant encore un système électronique embarqué configuré et programmé pour permettre de calculer la pression différentielle et d'actionner un dispositif d'alarme (19) lorsque la pression différentielle mesurée correspond à un indice de colmatage maximum prédéterminé.

13. Appareil selon la revendication 12, **caractérisé en ce que** les moyens (17, 18) de mesure de la pression en amont et en aval du filtre absolu (6) sont constitués, respectivement, par deux tubes de Pitot qui mesurent simultanément la pression en amont et en aval du filtre absolu.

14. Appareil selon l'une quelconque des revendications 12 ou 13, **caractérisé en ce qu'**il comporte une platine (21) supportant le système d'alarme (19) lié au colmatage et disposée sur le pupitre (11) situé sur la paroi avant du caisson rigide (1).

## Patentansprüche

1. Verbesserte Raumluftfilter- und Desinfiziereinheit, umfassend ein steifes Gehäuse (1), das Folgendes enthält:
- einerseits im unteren Teil:
- ein Vorfilter (2), das mit einem Lufteinlass (3) in Verbindung steht und es ermöglicht, die größten in der Luft vorhandenen Partikel zurückzuhalten, und
- ein motorbetriebenes Gebläse (4), das die Umwälzung eines großen Luftvolumens in Richtung des oberen Teils des Gehäuses ermöglicht, und
- andererseits im oberen Teil:
- ein Absolutfilter (6), das in der Luft verbleibende Feinpartikel zurückhalten kann, und
- einen Schalldämpfer (5), auch als Schalldämmkulisse bezeichnet, der aus dämpfenden Elementen besteht, die dazu imstande sind, den Geräuschpegel der lufttechnischen Anlage zu verringern, und zwischen dem motorbetriebenen Gebläse (4) und dem Absolutfilter (6) angeordnet ist,
wobei in der Einheit der Luftreinigungszyklus vertikal von unten nach oben durch die vorstehend genannten Komponenten (2, 4, 6) erfolgt,
**dadurch gekennzeichnet, dass** eine Isolierhülle um den Absolutfilter (6) angeordnet ist, wobei die Hülle die Eigenschaft aufweist, der Ausbreitung einerseits von Schallwellen, die durch den Durchtritt des Luftstroms durch das Absolutfilter entstehen, und andererseits von Strahlung, die durch Partikel aus radioaktivem Material erzeugt wird, die in dem Absolutfilter (6) zurückgehalten werden können, entgegenzuwirken.

2. Einheit nach Anspruch 1, **dadurch gekennzeichnet, dass** die Isolierhülle (12) aus einer Verkleidung oder Auskleidung besteht, mit der die Innenfläche von zumindest dem Abschnitt der Seitenwände des Gehäuses (1) versehen ist, der den Einbauraum des Absolutfilters (6) begrenzt.

3. Einheit nach einem der Ansprüche 1 oder 2, **dadurch gekennzeichnet, dass** die Isolierhülle (12) aus einer Verkleidung oder Auskleidung besteht, die sich über die gesamte Höhe des Gehäuses (1) erstreckt.

4. Einheit nach einem der Ansprüche 1 bis 3, **dadurch gekennzeichnet, dass** die Isolierhülle (12) aus einer Bleifolie (14) besteht.

5. Einheit nach einem der Ansprüche 1 bis 3, **dadurch gekennzeichnet, dass** die Isolierhülle (12) aus einem mehrschichtigen Material besteht, das aus einer Bleischicht (14) und einer Noppenschaumstoffschicht (15) gebildet ist.

6. Einheit nach einem der Ansprüche 1 bis 3, **dadurch gekennzeichnet, dass** die Isolierhülle (12) aus einer Plexiglasplatte besteht.

7. Einheit nach einem der Ansprüche 1 bis 3, **dadurch gekennzeichnet, dass** die Isolierhülle (12) aus einem mehrschichtigen Material besteht, das aus einer Plexiglasschicht und einer Noppenschaumstoffschicht (15) gebildet ist.

8. Einheit nach einem der Ansprüche 1 bis 3, **dadurch gekennzeichnet, dass** die Isolierhülle (12) aus einem mehrschichtigen Material besteht, das aus einer Bleischicht (14), einer Plexiglasschicht und einer Noppenschaumstoffschicht (15) gebildet ist.

9. Einheit nach einem der Ansprüche 1 bis 8, **dadurch gekennzeichnet, dass** die Isolierhülle (12), die aus einem mehrschichtigen Material besteht, das eine Schaumstoffschicht (15) beinhaltet, mit den Innenwänden des Gehäuses (1) über die Schaumstoffschicht (15) verklebt ist.

10. Einheit nach einem der Ansprüche 1 bis 9, **dadurch gekennzeichnet, dass** sie ein Aktivkohlefilter (13) umfasst, das stromaufwärts vom Absolutfilter (6) und in der Nähe des Letzteren angeordnet ist, wobei das Aktivkohlefilter dazu ausgelegt ist, Moleküle insbesondere zur Entfernung von Gasen und Gerüchen und/oder Radioelementen einzufangen.

11. Einheit nach Anspruch 10, **dadurch gekennzeichnet, dass** das Aktivkohlefilter (13) ebenfalls von der Isolierhülle (12) umgeben ist.

12. Einheit nach einem der Ansprüche 1 bis 3, **dadurch gekennzeichnet, dass** sie eine Steuervorrichtung (16) für die Leistung des Absolutfilters (6) umfasst, umfassend:
- einerseits ein Mittel (17) zum Messen des Drucks, das stromaufwärts vom Absolutfilter (6) angeordnet ist, und
- andererseits ein Mittel (18) zum gleichzeitigen Messen des Drucks, das stromabwärts vom Absolutfilter (6) angeordnet ist,
wobei die Steuervorrichtung (16) zudem ein integriertes elektronisches System umfasst, das dazu konfiguriert und programmiert ist, es zu ermöglichen, dass die Druckdifferenz berechnet wird und eine Alarmvorrichtung (19) betätigt wird, wenn die gemessene Druckdifferenz einem vorgegebenen maximalen Verstopfungsgrad entspricht.

13. Einheit nach Anspruch 12, **dadurch gekennzeichnet, dass** die Mittel (17, 18)zum Messen des Drucks stromaufwärts und stromabwärts zum Absolutfilter (6) jeweils aus zwei Pitotrohren bestehen, die gleichzeitig den Druck stromaufwärts und stromabwärts zum Absolutfilter messen.

14. Einheit nach einem der Ansprüche 12 oder 13, **dadurch gekennzeichnet, dass** sie eine Platine (21) umfasst, die das Alarmsystem (19) trägt, das mit der Verstopfung zusammenhängt, und auf dem Bedienfeld (11) angeordnet ist, das sich an der Vorderwand des steifen Gehäuses (1) befindet.

## Claims

1. An Improved apparatus for filtering and sanitising ambient air, comprising a rigid box (1) containing:
- on the one hand in the lower part:
- a pre-filter (2) communicating with an air inlet (3) and making it possible to retain the largest particles present in the air, and
- a motor fan (4) permitting circulation of a substantial volume of air in the direction of the upper part of said box, and
- on the other hand in the upper part:
- an absolute filter (6) which can retain the remaining fine particles present in the air, and
- an acoustic silencer (5), also referred to as a sound trap, formed by absorbent elements capable of reducing the sound level of the aeraullc installation and disposed between the motor fan (4) and the absolute filter (6),
in which apparatus the air purification cycle is effected vertically from bottom to top passing through the above components (2, 4, 6), **characterised in that** an insulating sheath is disposed around the absolute filter (6), said sheath having the property of opposing the propagation on the one hand of the sound waves resulting from the passage of the flow of air through the absolute filter and on the other hand the radiations generated by the particles of radioactive material which can be retained in said absolute filter (6).

2. Apparatus according to claim 1 **characterised in that** the insulating sheath (12) is formed by a covering or jacket with which is provided the Internal surface of at least the portion of the side walls of the box (1) delimiting the installation placement of the absolute filter (6).

3. Apparatus according to either one of claims 1 and 2 **characterised in that** the insulating sheath (12) is formed by a covering or jacket extending over the entire height of the box (1).

4. Apparatus according to any one of claims 1 to 3 **characterised in that** the insulating sheath (12) is formed by a lead sheet (14).

5. Apparatus according to any one of claims 1 to 3 **characterised in that** the insulating sheath (12) is formed by a multilayer material formed by a lead layer (14) and a honeycomb foam layer (15).

6. Apparatus according to any one of claims 1 to 3 **characterised in that** the insulating sheath (12) is formed by a plexiglass sheet.

7. Apparatus according to any one of claims 1 to 3 **characterised in that** the insulating sheath (12) is formed by a multilayer material formed by a plexiglass layer and a honeycomb foam layer (15).

8. Apparatus according to any one of claims 1 to 3 **characterised in that** the insulating sheath (12) is formed by a multilayer material formed by a lead layer (14), a plexiglass layer and a honeycomb foam layer (15).

9. Apparatus according to any one of claims 1 to 8 **characterised in that** the insulating sheath (12) formed by a multilayer material including a foam layer (15) is glued against the internal walls of the box (1) by way of said foam layer (15).

10. Apparatus according to any one of claims 1 to 9 **characterised in that** it comprises an activated carbon filter (13) disposed upstream of the absolute filter (6) and in the proximity of the latter, said activated carbon filter being designed to trap the molecules in particular for the elimination of gases and odours and/or radioactive elements.

11. Apparatus according to claim 10 **characterised in that** the activated carbon filter (13) is also surrounded by the insulating sheath (12).

12. Apparatus according to any one of claims 1 to 3 **characterised in that** it comprises a device (16) for controlling the efficiency of the absolute filter (6) comprising:
- on the one hand a means (17) for measuring pressure, that is disposed upstream of the absolute filter (6), and
- on the other hand a means (18) for simultaneous measurement of pressure, that is disposed downstream of the absolute filter (6),
said controlling device (16) further comprising an electronic on-board system designed and programmed to permit calculation of the differential pressure and to actuate an alarm device (19) when the measured differential pressure corresponds to a predetermined maximum clogging index.

13. Apparatus according to claim 12 **characterised in that** the means (17, 18) for measuring pressure upstream and downstream of the absolute filter (6) are respectively formed by two pitot tubes which simultaneously measure the pressure upstream and downstream of the absolute filter.

14. Apparatus according to either one of claims 12 and 13 **characterised in that** it comprises a plate (21) supporting the alarm system (19) linked to the clogging effect and disposed on the console (11) on the front wall of the rigid box (1).
